# EUROPEAN PATENT APPLICATION

(11) **EP 1 734 726 A2**
(43) Date of publication of application: **20.12.2006**
(21) Application number: 06011839.5
(22) Date of filing: 08.06.2006
(51) Int. Cl.: H04M 1/247

(54) **Apparatus and method for data processing in a mobile communication terminal**

(30) Priority: 13.06.2005 KR 20050050364
(71) Applicant: LG Electronics Inc., Yongdungpo-Gu Seoul 150-010 (KR)
(72) Inventor: Kim, Jong Hwan, Gangseo-gu, Seoul (KR)
(74) Representative: Katérle, Axel

(57) **Abstract**

A method and apparatus for data processing in a mobile communication terminal are provided whereby inconvenience when accessing and executing a corresponding function is reduced. A display unit providing a standby screen divided into a number input area and a contents input area and a memory for storing input data displayed on the display unit allows a user to access and execute functions via a keypad having a plurality of function keys.

## Description

This application claims the benefit of the Korean Patent Application No. 10-2005-0050364, filed on June 13, 2005, which is hereby incorporated by reference as if fully set forth herein.

### FIELD OF THE INVENTION

The present invention relates to a mobile communication terminal, and more particularly, to a method and apparatus for data processing in a mobile communication terminal. Although the present invention is suitable for a wide scope of applications, it is particularly suitable for facilitating a plurality of functions to be performed by standby screen connection.

### DISCUSSION OF THE RELATED ART

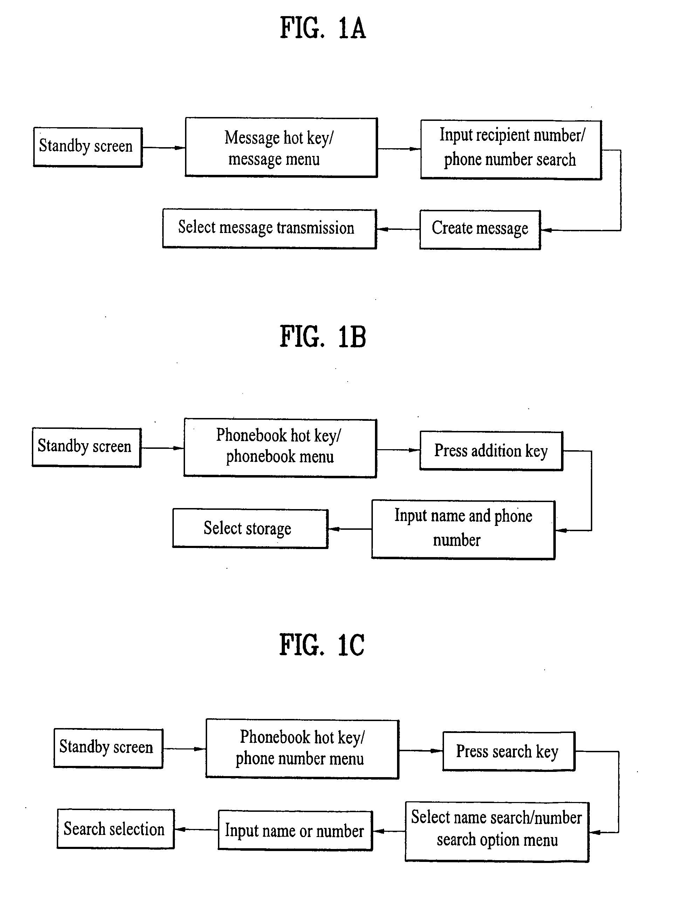

Generally, a mobile communication terminal is able to perform a plurality of functions including message transmission, phonebook addition, phonebook search, standby screen text establishment and memo addition as well as a send function. However, a mobile communication terminal according to a related art has difficulty accessing and executing a specific function through various procedures despite using a key to facilitate the corresponding function. Specifically, various procedures must be executed, as illustrated in FIGS. 1A to 1C.

A mobile phone has two normal operating modes, specifically a standby mode and a busy mode. In the standby mode, the mobile phone communicates periodically with the nearest transmission station in order to identify its physical location with respect to a communication zone in which it is located and to locate a calling signal. In the busy mode, the mobile phone transmits and receives speech signals to and from the nearest transmission station in order to allow a user to receive a call.

In normal use, the mobile phone operates primarily in the standby mode and transitions into the busy mode when a call is received or made. As used herein, the "standby screen" refers to the screen in the standby mode.

As illustrated in FIG. 1A, several steps are required in order to transmit a message using a mobile communication terminal according to a related art. The required steps include "standby screen" → "message function key or message menu" → "input message recipient phone number or select via phonebook" → "create message" → "select message transmission."

As illustrated in FIG. 1B, several steps are required in order to transmit a message using a mobile communication terminal according to a related art. The required steps include "standby screen" → "phonebook function key or phonebook menu" → "press an addition key in a phonebook list" → "input name and phone number" → "select storage."

As illustrated in FIG. 1C, several steps are required in order to search phone numbers using a mobile communication terminal according to a related art. The required steps include "standby screen" → "phonebook function key or phonebook menu" → "press a menu key in a phonebook list" → "select name search or number search option menu" → "input name or number" → "search selection."

### SUMMARY OF THE INVENTION

Accordingly, the present invention is directed to a method and apparatus for data processing in a mobile communication terminal that substantially obviate one or more problems due to limitations and disadvantages of the related art.

An object of the present invention is to provide a method and apparatus for data processing in a mobile communication terminal that reduce inconvenience when accessing and executing a specific function. Another object of the present invention is to provide a method and apparatus for data processing in a mobile communication terminal that facilitate conveniently executing a designated function by inputting data on a standby screen.

In one aspect of the present invention, a method of processing data in a mobile communication terminal is provided. The method includes dividing an input screen into a plurality of input areas, displaying data input via at least one of the plurality of input areas and performing an operation according to a function key selected by a user, the operation performed using the input data.

It is contemplated that the plurality of input areas include a number input area for receiving at least one numeral and a contents input area for receiving at least one of a numeral, a character and an image. It is further contemplated that the operation includes initiating a call connection according to the at least one numeral input to the number input area if the function key is a send key.

It is contemplated that the operation further includes initiating the call connection according to a phone number corresponding to the at least one numeral if the at least numeral is an abbreviated number. It is further contemplated that the operation includes searching for a phone number corresponding to the at least one of a numeral, a character and an image input to the contents input area and initiating a call connection according to the corresponding phone number if the function key is a send key.

It is contemplated that the operation further includes displaying a list if the at least one of a numeral, a character and an image includes a portion of a phonebook, the list including the at least one of a numeral, a character and an image. It is further contemplated that the method further includes initiating a call connection according to a phone number selected by the user from the displayed list.

It is contemplated that the operation includes initiating a call connection and transmitting a message if the function key is a message key, the call connection initiated according to the at least one numeral input to the number input area and the message including the at least one of a numeral, a character and an image input to the contents input area. It is further contemplated that the operation further includes initiating the call connection according to a phone number corresponding to the at least one numeral if the at least numeral is an abbreviated number.

It is contemplated that the operation includes adding a phone number to a list or searching the list if the function key is a phonebook key, the phone number added to the list if entries exist in both the number input area and the contents input area and the list searched if entries exist in only the number input area or the contents input area. It is further contemplated that adding a phone number to the list includes adding the at least one of a numeral, a character and an image input to the contents input area to a name field of the list and adding the at least one numeral input to the number input area to a number field of the list.

It is contemplated that searching the list includes searching for a phone number in the list corresponding to the at least one numeral input to the number input area or searching for a name in the list corresponding to the at least one of a numeral, a character and an image input to the contents input area. It is further contemplated that the operation includes displaying information related to at least one operable function if the function key is a connection key, the information displayed as a pop-up image. Preferably, the method further includes performing an operable function selected by the user from the pop-up image.

In another aspect of the present invention, a mobile communication terminal is provided. The mobile communication terminal includes a display unit adapted to provide an input screen divided into at least a number input area and a contents input area, the number input area for receiving at least one numeral and the contents input area for receiving at least one of a numeral, a character and an image, a memory unit adapted to store input data displayed on the display unit, a keypad having a plurality of function keys and a control unit adapted to perform an operation according one of the plurality of function keys selected by a user, the operation performed using the stored input data.

It is contemplated that the mobile communication terminal further includes an input switching key adapted to switch between the number input area and the contents input area. It is further contemplated that the plurality of function keys include a send function key, a message function key a phonebook function key and/or a connection function key.

It is contemplated that the controller is further adapted to initiate a call connection according to the at least one numeral input to the number input area if the user selects the send function key. It is further contemplated that the controller is further adapted to initiate the call connection according to a phone number corresponding to the at least one numeral if the at least numeral is an abbreviated number.

It is contemplated that the controller is further adapted to search for a phone number corresponding to the at least one of a numeral, a character and an image input to the contents input area and initiate a call connection according to the corresponding phone number if the user selects the send function key. It is further contemplated that the controller is further adapted to display a list if the at least one of a numeral, a character and an image includes a portion of a phonebook, the list including the at least one of a numeral, a character and an image.

It is contemplated that the controller is further adapted to initiate the call connection according to a phone number selected by the user from the displayed list. It is further contemplated that the controller is further adapted to initiate a call connection and transmit a message if the user selects the message function key, the call connection initiated according to the at least one numeral input to the number input area and the message including the at least one of a numeral, a character and an image input to the contents input area.

It is contemplated that the controller is further adapted to initiate the call connection according to a phone number corresponding to the at least one numeral if the at least numeral is an abbreviated number. It is further contemplated that the controller is further adapted add a phone number to a list or search the list if the user selects the phonebook function key, the phone number added to the list if entries exist in both the number input area and the contents input area and the list searched if entries exist in only the number input area or the contents input area.

It is contemplated that the controller is further adapted to add the at least one of a numeral, a character and an image input to the contents input area to a name field of the list and add the at least one numeral input to the number input area to a number field of the list. It is further contemplated that the controller is further adapted to search for a phone number in the list corresponding to the at least one numeral input to the number input area or search for a name in the list corresponding to the at least one of a numeral, a character and an image input to the contents input area.

It is contemplated that the controller is further adapted to display information related to at least one operable function if the user selects the connection function key, the information displayed as a pop-up image. It is further contemplated that the controller is further adapted to perform an operable function selected by the user from the pop-up image.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIGS. 1A to 1C are flowcharts illustrating a conventional process for executing a specific function.

FIG. 2 is a perspective view of a mobile communication terminal according to one embodiment of the present invention.

FIG. 3 is a diagram illustrating the use of a menu key according to the present invention.

FIG. 4 is a diagram illustrating the use of a connection key according to the present invention.

FIG. 5 is a flowchart of a method for processing data using a mobile communication terminal according to the present invention.

FIGS. 6A to 6D are diagrams illustrating the use of a send function key according to one embodiment of the present invention.

FIG. 7A and FIG. 7B are diagrams illustrating the use of a message function key according to one embodiment of the present invention.

FIGS. 8A to 8C are diagrams illustrating the use of a phonebook function key according to a one embodiment of the present invention.

FIG. 9 is a block diagram of a mobile communication terminal according to one embodiment of the present invention.

### DETAILED EMBODIMENTS OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

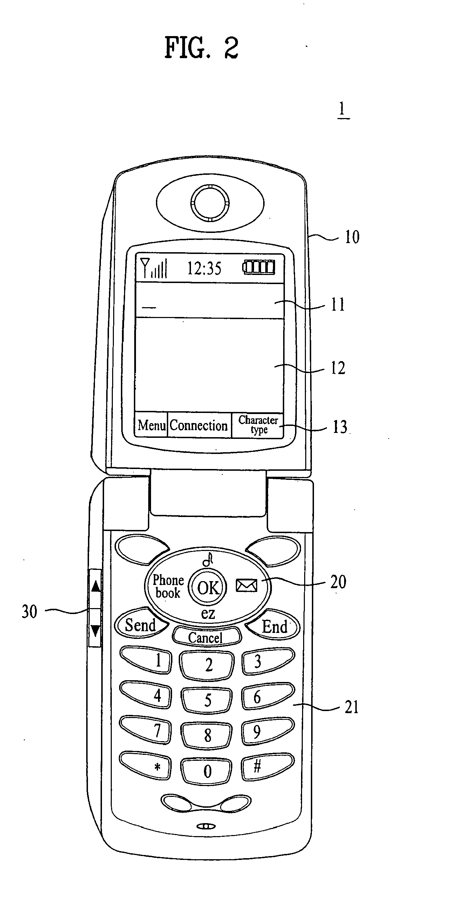

FIG. 2 is a perspective view of a mobile communication terminal 1 according to one embodiment of the present invention. As illustrated in FIG. 2, the mobile communication terminal 1 includes a display unit 10 having a standby screen divided into a number input area 11 and a contents input area 12, a keypad 21 having numeral keys and character keys for performing 9 a basic input function and function keys 20 or hot keys, for performing specifically designated additional functions and an input switching key 30 provided to one lateral side of the terminal 100 for switching between the number input area and the contents input area of the standby screen.

Data input via the number input area 11 may be an abbreviated number or a phone number. If a cursor is placed at a corresponding area, only the numeral keys of the keypad 21 may be activated to input numerals to the number input area 11 or characters, numerals, or images to the contents input area 12. Numerals are displayed on the number input unit 11 and characters are displayed on the contents input area 12.

The mobile communication terminal 1 further includes a memory (not shown) for temporarily storing input data for display on the display unit 10 and a control unit (not shown) for outputting a control signal to implement an operation of a corresponding one of the function keys using the input data temporarily stored in the memory. The memory and the control unit are provided within the terminal.

Soft keys 13 are provided on a lower end portion of the display unit 10 and include a "menu" soft key, a "connection" soft key and a "character type" soft key. If the "character type soft" key is pressed, switching between numerals, capital letters and small letters may be achieved. It is contemplated that the "character type" soft key may be related to a specific language, such as English or Korean.

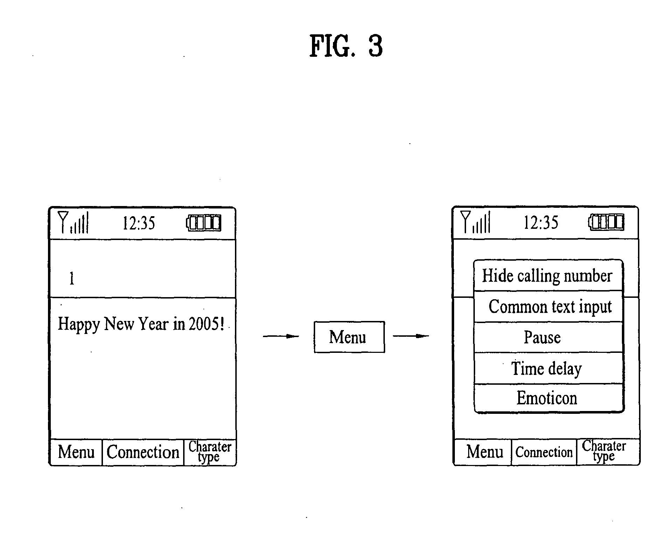

FIG. 3 illustrates the use of the "menu" soft key. As illustrated in FIG. 3, if the "menu" soft key is pressed, functions such as "hide calling number", "common text input", "passive standby (pause)", "time delay" and "emoticon" are displayed as a pop-up image.

The "common text" function refers to frequently used text such as greetings. The "pause" function refers to a function applied when a numeral must to be re-input after the duration of a temporary stop. The "time delay" function refers to a function for sending characters automatically after a predetermined time delay when transmitting a phone number loaded within the mobile communication terminal.

The "pause" function accesses a phone number transmission temporary stop function loaded in the mobile communication terminal and is represented as an alphabet 'P'. If a 'SEND' button is pressed again, a call is connected to a corresponding phone number displayed after the 'P'. The "time delay" function is represented as an alphabet 'T'. When the "time delay" function is activated, a user waits for a call connection as when using a normal phone.

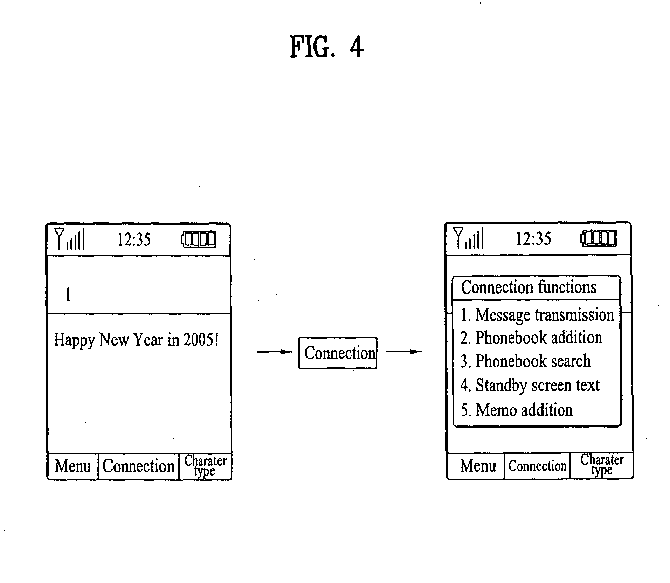

FIG. 4 illustrates the use of the "connection" soft key. As illustrated in FIG. 4, if the "connection" soft key is pressed, a plurality of functions connectible to the standby screen are displayed as a pop-up image. The "connection" function refers to various executable functions following a current mode.

On the pop-up image, "message transmission", "phonebook addition", "phonebook search", "standby screen text" and "memo addition" are displayed. If a specific function is selected on the pop-up image, the selected function may be executed using the contents of the number input area 11 and the contents input area 12.

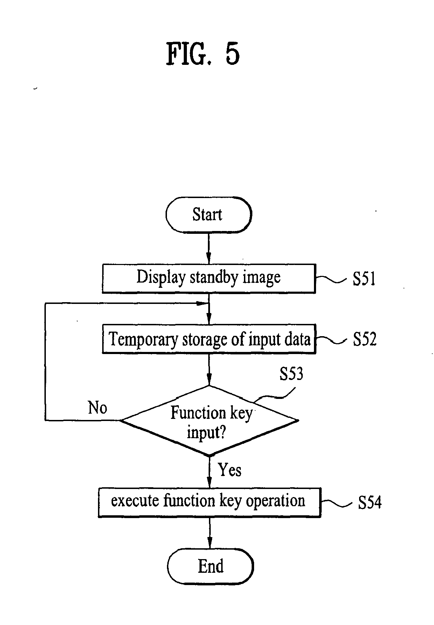

FIG. 5 is a flowchart of a method for processing data using a mobile communication terminal according to the present invention. As illustrated in FIG. 5, an image divided into a number input area 11 and a contents input area 12 is displayed on a standby screen in a standby mode (S51).

Data input to the number input area 11 and/or the contents input area 12 on the standby screen are temporarily stored in a memory provided within the terminal (S52). It is then determined if a function key has been input (S53).

The function key input may be from a random function key or a hot key. Specifically, a usable function key includes a send function key, a message function key, a phonebook function key or a connection function key. If a function key input was received, an operation corresponding to the function key is executed using the data temporarily stored in the memory (S54).

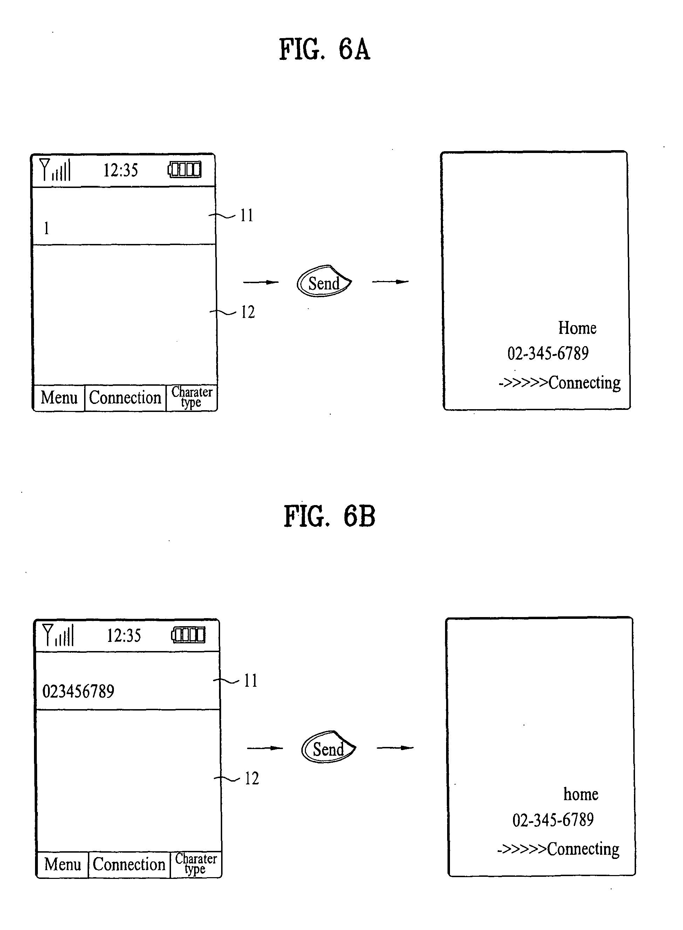

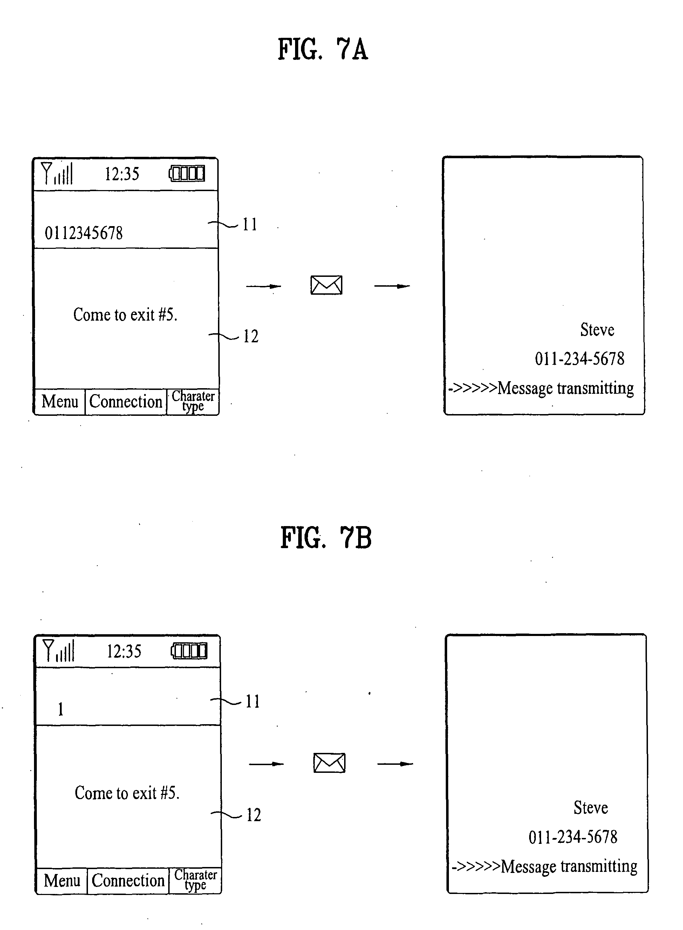

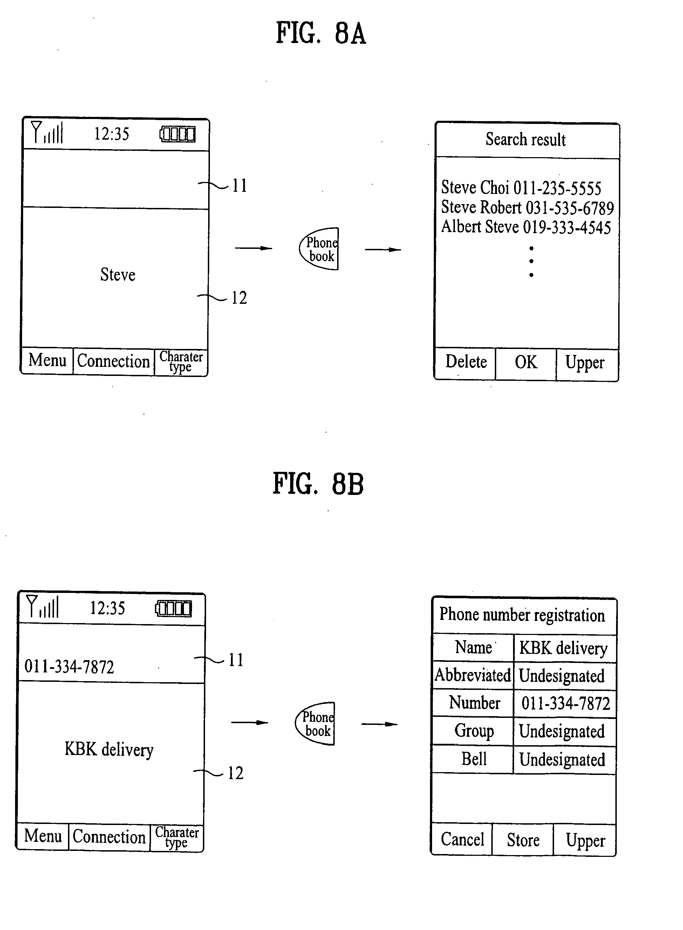

FIGS. 6A to 6D illustrate the use of the send function key according to one embodiment of the present invention. FIG. 7A and FIG. 7B illustrate the use of the message function key according to one embodiment of the present invention. FIGS. 8A to 8C illustrate the use of the phonebook function key according to one embodiment of the present invention.

As illustrated in FIG. 6A, the send function key is pressed after an abbreviated number has been input to the number input area 11. A call connection is then directly performed using a stored number corresponding to the abbreviated number.

As illustrated in FIG. 6B, the entire phone number is input to the number input area 11. A call connection is then directly performed using the phone number input to the number input area 11.

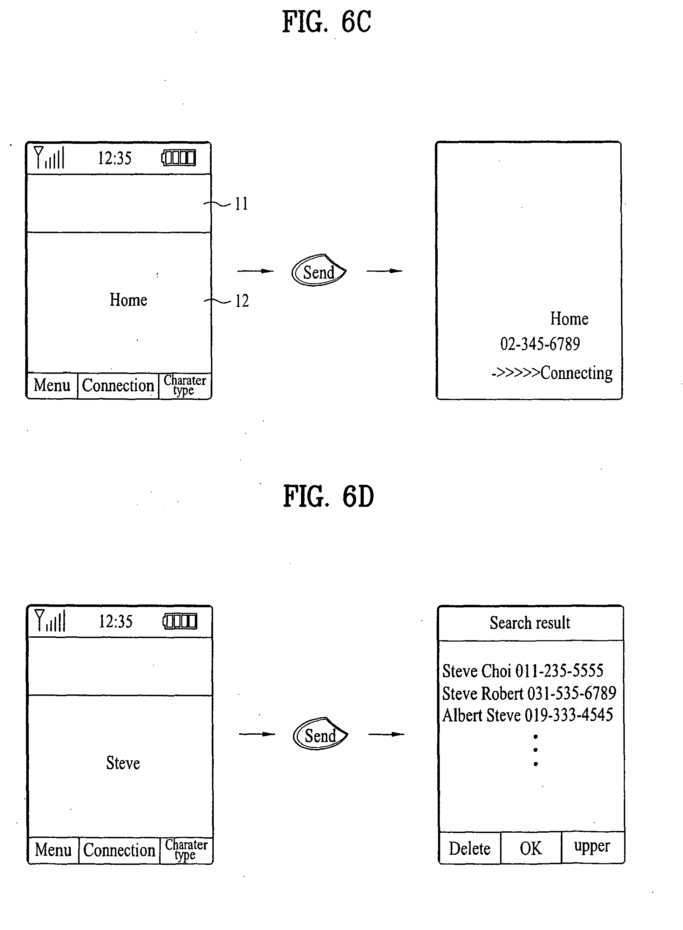

As illustrated in FIG. 6C, a call connection is performed to a phone number corresponding to the contents input to the contents input area 12. As illustrated in FIG. 6D, if the entered contents do not exist in a phonebook or if phonebook entries having an overlapped number or name exist, a phonebook list is displayed to allow a user to perform a call connection to number.

As illustrated in FIG. 7A, if a phone number is input to the number input area 11 and the message function key is pressed after a message is input to the contents input area 12, the message input to the contents input area is transmitted via the phone number input to the number input area.

As illustrated in FIG. 7B, an abbreviated number is input to the number input area 11 and a message input to the contents input area 12 is transmitted via a corresponding phone number stored as the abbreviated number.

As illustrated in FIG. 8A, if the phonebook function key is pressed after data is input to the number input area 11 and/or the contents input area 12, it is determined whether data has been input to both the number input area and the contents input area. Specifically, it is determined whether to execute a phonebook addition function or a search function.

As illustrated in FIG. 8B, if data is input to both the number input area 11 and the contents input area 12, the data is added to a phonebook list. Specifically, the data input to the contents input area 12 is stored in a name field for a phone number and the data input to the number input area 11 is stored in a corresponding number field.

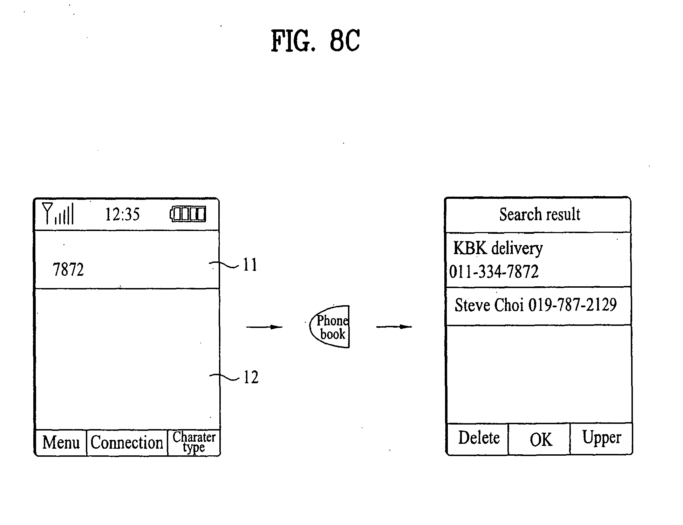

As illustrated in FIG. 8A, if the phonebook function key is pressed after data is input to only the contents input area 12, a list of phone numbers corresponding to the data is displayed from a phonebook database. As illustrated in FIG. 8C, if the phonebook function key is pressed after data is input to only the number input area 11, a list of phone numbers including the data is displayed from a phonebook database.

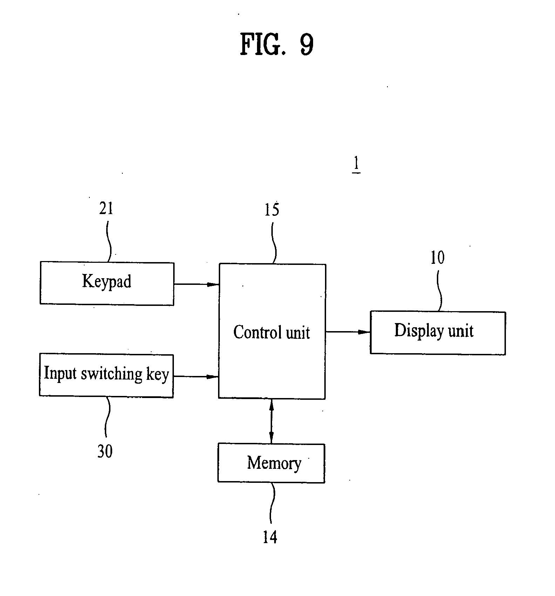

FIG. 9 is a block diagram of the mobile communication terminal 1 according to the present invention. As illustrated in FIG. 9, the mobile communication terminal 1 includes a keypad 21 including numeral keys and character keys to perform basic input functions and function keys 20, or hot keys, to perform specifically designated additional functions, a display unit 10 having a standby screen divided into a number input area 11 and a contents input area 12, a memory 14 for temporarily storing input data displayed on the display unit, an input switching key 30 for switching between the number input area and the contents input area of the display unit and a control unit 15 for outputting a control signal to implement an operation of one of the function keys using the input data temporarily stored in the memory.

The present invention provides several advantages. The present invention allows a user to conveniently access and execute a specific function. Furthermore, a function of a designated function key or a specifically connected function can be conveniently executed using data input to a standby screen.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of processing data in a mobile communication terminal, the method comprising:
dividing an input screen into a plurality of input areas;
displaying data input via at least one of the plurality of input areas; and
performing an operation according to a function key selected by a user, the operation performed using the input data.

2. The method of claim 1, wherein the at least two input areas comprise a number input area for receiving at least one numeral and a contents input area for receiving at least one of a numeral, a character and an image.

3. The method of claim 2, wherein the operation comprises initiating a call connection according to the at least one numeral input to the number input area if the function key is a send key.

4. The method of claim 3, wherein the operation further comprises initiating the call connection according to a phone number corresponding to the at least one numeral if the at least numeral is an abbreviated number.

5. The method of claim 2, wherein the operation comprises searching for a phone number corresponding to the at least one of a numeral, a character and an image input to the contents input area and initiating a call connection according to the corresponding phone number if the function key is a send key.

6. The method of claim 5, wherein the operation further comprises displaying a list if the at least one of a numeral, a character and an image comprises a portion of a phonebook, the list comprising the at least one of a numeral, a character and an image.

7. The method of claim 6, further comprising initiating a call connection according to a phone number selected by the user from the displayed list.

8. The method of claim 2, wherein the operation comprises initiating a call connection and transmitting a message if the function key is a message key, the call connection initiated according to the at least one numeral input to the number input area and the message comprising the at least one of a numeral, a character and an image input to the contents input area.

9. The method of claim 8, wherein the operation further comprises initiating the call connection according to a phone number corresponding to the at least one numeral if the at least numeral is an abbreviated number.

10. The method of claim 2, wherein the operation comprises one of adding a phone number to a list and searching the list if the function key is a phonebook key, the phone number added to the list if entries exist in both the number input area and the contents input area and the list searched if entries exist in only one of the number input area and the contents input area.

11. The method of claim 10, wherein adding a phone number to the list comprises adding the at least one of a numeral, a character and an image input to the contents input area to a name field of the list and adding the at least one numeral input to the number input area to a number field of the list.

12. The method of claim 10, wherein searching the list comprises one of searching for a phone number in the list corresponding to the at least one numeral input to the number input area and searching for a name in the list corresponding to the at least one of a numeral, a character and an image input to the contents input area.

13. The method of claim 2, wherein the operation comprises displaying information related to at least one operable function if the function key is a connection key, the information displayed as a pop-up image.

14. The method of claim 13, further comprising performing an operable function selected by the user from the pop-up image.

15. A mobile communication terminal, comprising:
a display unit adapted to provide an input screen divided into at least a number input area and a contents input area, the number input area for receiving at least one numeral and the contents input area for receiving at least one of a numeral, a character and an image;
a memory unit adapted to store input data displayed on the display unit;
a keypad having a plurality of function keys; and
a control unit adapted to perform an operation according one of the plurality of function keys selected by a user, the operation performed using the stored input data.

16. The mobile communication terminal of claim 15, further comprising an input switching key adapted to switch between the number input area and the contents input area.

17. The mobile communication terminal of claim 15, wherein the plurality of function keys comprise at least one of a send function key, a message function key a phonebook function key and a connection function key.

18. The mobile communication terminal of claim 17, wherein the controller is further adapted to initiate a call connection according to the at least one numeral input to the number input area if the user selects the send function key.

19. The mobile communication terminal of claim 18, wherein the controller is further adapted to initiate the call connection according to a phone number corresponding to the at least one numeral if the at least numeral is an abbreviated number.

20. The mobile communication terminal of claim 17, wherein the controller is further adapted to search for a phone number corresponding to the at least one of a numeral, a character and an image input to the contents input area and initiate a call connection according to the corresponding phone number if the user selects the send function key.

21. The mobile communication terminal of claim 20, wherein the controller is further adapted to display a list if the at least one of a numeral, a character and an image comprises a portion of a phonebook, the list comprising the at least one of a numeral, a character and an image.

22. The method of claim 21, wherein the controller is further adapted to initiate the call connection according to a phone number selected by the user from the displayed list.

23. The mobile communication terminal of claim 17, wherein the controller is further adapted to initiate a call connection and transmit a message if the user selects the message function key, the call connection initiated according to the at least one numeral input to the number input area and the message comprising the at least one of a numeral, a character and an image input to the contents input area.

24. The mobile communication terminal of claim 23, wherein the controller is further adapted to initiate the call connection according to a phone number corresponding to the at least one numeral if the at least numeral is an abbreviated number.

25. The mobile communication terminal of claim 17, wherein the controller is further adapted to one of add a phone number to a list and search the list if the user selects the phonebook function key, the phone number added to the list if entries exist in both the number input area and the contents input area and the list searched if entries exist in only one of the number input area and the contents input area.

26. The mobile communication terminal of claim 25, wherein the controller is further adapted to add the at least one of a numeral, a character and an image input to the contents input area to a name field of the list and add the at least one numeral input to the number input area to a number field of the list.

27. The mobile communication terminal of claim 25, wherein the controller is further adapted to one of search for a phone number in the list corresponding to the at least one numeral input to the number input area and search for a name in the list corresponding to the at least one of a numeral, a character and an image input to the contents input area.

28. The mobile communication terminal of claim 17, wherein the controller is further adapted to display information related to at least one operable function if the user selects the connection function key, the information displayed as a pop-up image.

29. The mobile communication terminal of claim 28, wherein the controller is further adapted to perform an operable function selected by the user from the pop-up image.
